# EUROPÄISCHE PATENTSCHRIFT

(11) **EP 1 956 695 B1**
(45) Veröffentlichungstag und Bekanntmachung des Hinweises auf die Patenterteilung: **21.08.2013**
(21) Anmeldenummer: 08000448.4
(22) Anmeldetag: 11.01.2008
(51) Int. Cl.: H02G 15/196, H02G 15/18, H02G 15/113

(54) **Reparatur- und Verbindungsmuffe**
Repair and connection bush
Manchon de réparation et de raccordement

(30) Priorität: 09.02.2007 DE 102007006468
(43) Veröffentlichungstag der Anmeldung: 13.08.2008
(73) Patentinhaber: BBL Bahnbau Lüneburg GmbH, 21337 Lüneburg (DE)
(72) Erfinder: Falkenberg, Marcus, 21337 Lüneburg (DE)
(74) Vertreter: Schildberg, Peter

(56) Entgegenhaltungen:
- DE-U1- 9 414 300
- JP-A- 11 355 950
- JP-A- 2000 003 624
- JP-A- 2001 136 650
- US-A- 3 781 458

## Beschreibung

Die Erfindung betrifft eine Reparatur- und Verbindungsmuffe nach dem Oberbegriff des Anspruchs 1 sowie ein Verfahren zum Reparieren oder Verbinden eines Kabels mit einer Reparatur- und Verbindungsmuffe.

Zum Verbinden zweier Enden eines Kabels sind Verbindungsmuffen bekannt, die die Verbindungsstelle schützend umhüllen. Die Schutzfunktion bezieht sich dabei einerseits auf einen Schutz von Personen oder Gegenständen in einer Umgebung der Verbindungsstelle des Kabels vor schädlichen Einflüssen wie Stromschlägen durch die Leiter des Kabels. Andererseits müssen die Leiter des Kabels vor schädlichen äußeren Einflüssen durch beispielsweise Feuchtigkeit oder Hitze geschützt werden. Beide Schutzfunktionen können für die Betriebssicherheit des Kabels von Bedeutung sein. Insbesondere für Signalkabel, wie sie beispielsweise im Bahnbereich eingesetzt werden, ist ein einwandfreies Funktionieren der Kabelverbindung z.B. auch im Brandfall von Bedeutung. Schließlich kann bei Feuer auch von Gasen, die aus dem Kabel selbst oder der Verbindungsmuffe austreten, eine Gefährdung ausgehen. Darum werden derartige Verbindungsmuffen häufig aus flammwidrigen Materialien hergestellt.

Aus dem Stand der Technik sind Verbindungsmuffen bekannt, die im wesentlichen aus einer Anzahl von Schläuchen bestehen, die vor dem Verbinden der Leiter des Kabels auf ein Kabelende aufgeschoben werden. Anschließend werden die Leiter des Kabels miteinander verbunden und die schlauchförmigen Schutzschichten werden über die Verbindungsstelle geschoben und fixiert. Nachteilig an derartigen Verbindungsmuffen ist, daß im Falle einer Beschädigung der Verbindungsmuffe oder eines der möglicherweise zahlreichen Leiter des Kabels die gesamte Verbindungsmuffe ausgetauscht werden muß, wobei dazu ein Auftrennen sämtlicher Leiter des Kabels erforderlich ist, damit die schlauchförmigen Schichten der neuen Verbindungsmuffe auf eine Ende des Kabels aufgeschoben werden können. Anschließend muß die Funktionsfähigkeit aller einzelnen Leiter überprüft werden, was unter Umständen ein sehr langwieriger Vorgang ist, der zudem beispielsweise bei Signalkabeln im Bahnbereich nur in Zeiten ohne Bahnbetrieb ausgeführt werden kann. Somit entsteht ein erheblicher Reparaturaufwand, selbst wenn nur ein einziger von beispielsweise mehreren hundert Leitern eines Signalkabels tatsächlich reparaturbedürftig ist.

Die Druckschrift US 3, 781, 458 A betrifft eine Kabelverbindung, bei der die Leiter eines Kabels mit einer Hülse verbunden werden. Die im Bereich der entfernten Isolierung vorhandenen Lücken werden von einem elastischen Füllmaterial ausgeglichen. Anschließend werden vier Streifen eines feuerbeständigen Bands um die Anordnung herum gelegt und schließlich mit spiralförmig gewickelten Streifen an den Enden fixiert.

Die Druckschrift DE 94 14 300 U1 betrifft eine Kabelverbindung, bei der die einzelnen Leiter mit Pressverbindern verbunden werden. Die einzelnen Verbindungen werden jeweils von einer Innenmuffe in Form eines Schrumpfschlauchs geschützt. Anschließend kann ein dünnes Polymerband um die Adern gewi-ckelt werden. Schließlich wird eine Außenmuffe in Form eines flammwidrigen Schrumpfschlauches fixiert.

Die Druckschrift JP 11355950 A zeigt eine Verbindung für ein Hochspannungskabel, bei dem die Leiter von einer Hülse verbunden sind. Darum herum sind unterschiedliche, teils flammwidrige Schichten angeordnet

Die Druckschrift JP 2001136650 A zeigt ebenfalls eine Verbindung für ein Hochspannungskabel. Die Verbindung der Leiter wird von einer Hülse gebildet. Ein Glimmer-Verbund-Band wird um die Verbindung gewickelt und bildet eine feuerbeständige Schicht. Hinzu kommen eine metallische Abschirmschicht, eine halbleitende Schicht sowie eine weitere feuerbeständige Schutzschicht und eine wasserfeste Schicht.

Davon ausgehend ist es die Aufgabe der Erfindung, eine Reparatur- und Verbindungsmuffe zur Verfügung zu stellen, die mit geringem Arbeitsaufwand montiert werden kann und die die genannten Schutzfunktionen optimal erfüllt, sowie ein Verfahren zum Reparieren oder Verbinden eines Kabels mit einer Reparatur- und Verbindungsmuffe.

Diese Aufgabe wird gelöst durch die Reparatur- und Verbindungsmuffe mit den Merkmalen des Anspruchs 1. Vorteilhafte Ausgestaltungen sind in den Unteransprüchen angegeben.

Die erfindungsgemäße Reparatur- und Verbindungsmuffe hat ein Kabel, das mindestens einen Leiter mit zwei an einer Verbindungsstelle miteinander verbundenen Leiterenden aufweist, und eine Vielzahl unterschiedlicher, flammwidriger Schichten, die einen Abschnitt des Kabels um die Verbindungsstelle herum umgeben, wobei alle Schichten nach dem Verbinden der Leiterenden anbringbar sind.

Das Kabel kann dabei ein beliebiges Kabel sein, beispielsweise ein elektrisches Signalkabel, ein Lichtwellenleiter oder auch ein elektrisches Versorgungskabel. Die Reparatur- und Verbindungsmuffe befindet sich stets an einer Verbindungsstelle des Kabels, d.h. an einer Stelle, an der mindestens einer der Leiter zwei miteinander verbundene Leiterenden aufweist. Die Verbindung der Leiterenden kann dabei durch eine beliebige, bekannte Verbindungstechnik erfolgen, beispielsweise durch Löten, Krimpen, Klemmen oder Spleißen. Die verbundenen Leiterenden können durch eine Isolationsschicht, beispielsweise einen Schrumpfschlauch, geschützt sein. Um die Verbindungsstelle herum befindet sich eine Vielzahl unterschiedlicher, flammwidriger Schichten. Die Schichten sind unterschiedlich, d.h. mindestens zwei der Schichten weisen unterschiedliche Materialeigenschaften oder eine unterschiedliche geometrische Ausgestaltung auf. Für einen guten Brandschutz sind die Schichten flammwidrig. Es können jedoch auch einzelne, nicht flammwidrige Schichten hinzukommen, die gegebenenfalls durch Kombination mit den flammwidrigen Schichten den Brandschutz nicht beeinträchtigen. Die Schichten verlaufen um einen Abschnitt des Kabels um die Verbindungsstelle herum, d.h. sie schützen bevorzugt den gesamten von der Verbindung betroffenen Bereich des Kabels. Alle Schichten sind nach dem Verbinden der Leiterenden anbringbar, d.h. die Schichten bzw. die Materialien, aus denen die Schichten gebildet sind, sind beim Verbinden der Leiterenden noch vollständig von dem Kabel getrennt. Sie werden erst nach dem Verbinden der Leiterenden um das Kabel herumgeführt und an dem Kabel angebracht.

Durch die Erfindung wird eine Reparatur- und Verbindungsmuffe mit hervorragenden Brandschutzeigenschaften zur Verfügung gestellt, die nachträglich an einer Verbindungsstelle eines Kabels montiert werden kann. Es ist dazu nicht erforderlich, das Kabel komplett zu durchtrennen. Dadurch kann eine beschädigte Verbindungsmuffe leicht ausgetauscht werden. Gleichzeitig kann ein defektes Kabel durch Reparieren ausschließlich der von dem Defekt betroffenen Leiter instand gesetzt und mit einer Reparatur- und Verbindungsmuffe umgeben werden. Ein Auftrennen weiterer Leiter ist nicht erforderlich. Eine aufwendige Überprüfung der nicht aufgetrennten Leiter kann entfallen.

In einer bevorzugten Ausgestaltung der Erfindung sind die Schichten halogenfrei. Dadurch werden im Brandfall weniger für den Menschen giftige Gase oder sonstige aggressive Substanzen freigesetzt. Weiter bevorzugt werden Materialien, deren Verwendung auch in Kombination im Brandfall zu einer möglichst geringen Rauchdichte und Azidität führt.

Gemäß einer weiteren bevorzugten Ausgestaltung der Erfindung weist das Kabel einen Kabelmantel auf, der in einem Abschnitt im Bereich der Verbindungsstelle entfernt ist, und mindestens eine der Schichten erstreckt sich von dem Kabelmantel an einer Seite der Verbindungsstelle über die Verbindungsstelle bis zum Kabelmantel an der anderen Seite der Verbindungsstelle. Dadurch wird mindestens derjenige Bereich der Verbindungsstelle von der Reparatur- und Verbindungsmuffe geschützt, der nicht von dem Kabelmantel umgeben ist. Bei Kabeln mit mehreren Mänteln, beispielsweise einem Innen- und einem Außenmantel, kann sich die Schicht sowohl bis zu dem Innenmantel als auch bis zu dem Außenmantel erstrecken. Bevorzugt erstrecken sich einige Schichten bis zum Innenmantel, während sich weitere, äußere Schichten bis zu dem Außenmantel erstrecken.

In einer weiteren bevorzugten Ausgestaltung der Erfindung ist mindestens eine der Schichten ein abwickelbares Band. Das abwickelbare Band befindet sich üblicherweise auf einer Rolle und kann nach dem Verbinden der Leiterenden direkt um die Verbindungsstelle herumgewickelt werden. Die Montage ist dabei sehr einfach und die Menge des Bandes, welches um die Verbindungsstelle herum abgewickelt wird, kann flexibel gewählt werden. Gleichzeitig liegt eine auf diese Weise erstellte Schicht stets dicht an dem Kabel an, so daß eine übermäßige Vergrößerung des Durchmessers im Bereich der Reparatur- und Verbindungsmuffe vermieden wird.

Gemäß einer weiteren bevorzugten Ausgestaltung der Erfindung besteht mindestens eine der Schichten aus einem Material mit einer Wärmeleitfähigkeit von mehr als 50 W/(mK), mindestens eine weitere der Schichten besteht aus einem Material mit einer Wärmeleitfähigkeit von weniger als 10 W/(mK). Mit anderen Worten ist eine der Schichten ein relativ guter Wärmeleiter, während eine andere Schicht von einem Wärmeisolator gebildet wird. Die Kombination zweier derartiger Schichten ergibt einen besonders wirksamen Hitzeschutz, weil die Schicht mit der hohen Wärmeleitfähigkeit punktuell auftretende Hitzeeinwirkung ableiten und über einen größeren Bereich verteilen kann, während die wärmeisolierende Schicht den Wärmefluß zu dem Kabel reduziert. Versuche haben ergeben, daß durch diese Kombination eine verbesserte Schutzwirkung erzielt wird. Bevorzugt werden mehrere wärmeisolierende mit mehreren wärmeleitenden Schichten kombiniert.

In einer weiteren bevorzugten Ausgestaltung der Erfindung ist mindestens eine der Schichten ein Glasseidenband. Das Glasseidenband kann leicht durch Herumwickeln um das Kabel montiert werden. Die das Band bildenden Glasfasern zeichnen sich zudem durch eine hohe Wärmeisolation und Temperaturbeständigkeit aus.

Gemäß einer weiteren bevorzugten Ausgestaltung der Erfindung ist mindestens eine der Schichten ein Kupfergewebeband. Das Kupfergewebeband wird von einem Gewebe aus Kupferdrähten gebildet und kann durch Herumwickeln des Kupfergewebebands um das Kabel einfach montiert werden. Durch die hohe Wärmeleitfähigkeit des Kupfers und die in unterschiedliche Richtungen verlaufenden Kupferdrähte weist die Schicht eine hervorragende Wärmeleitfähigkeit auf.

Bei der Erfindung ist mindestens eine der Schichten eine Schrumpfmanschette. Die Schrumpfmanschette besteht aus einem schrumpfbaren Material, das um das Kabel herumgelegt und zu einer geschlossenen Manschette verbunden wird. Durch nachfolgendes Schrumpfen der Schrumpfmanschette, beispielsweise durch Hitzeeinwirkung, liegt die Manschette eng an dem Kabel bzw. an den darunter befindlichen Schichten an. Dadurch werden die einzelnen Leiter an der Verbindungsstelle und gegebenenfalls darüber befindliche Schichten wirksam fixiert. Gleichzeitig trägt die Schrumpfmanschette zu einem geringen äußeren Durchmesser der Reparatur- und Verbindungsmuffe bei und verhindert das Eindringen von Wasser (Querwasserdichte).

Die Schrumpfinanschette ist in Längsrichtung geteilt und besteht aus einem schrumpfbaren Material, dessen entlang der Teilungsstelle in Längsrichtung verlaufende Kanten von einer Metallschiene zusammengehalten sind. Das schrumpfbare Material kann zu einem Rechteck zugeschnitten sein, dessen Längsrichtung entlang des Kabels verläuft und das um das Kabel herumgeführt wird. Die Metallschiene hält dann die beiden längeren Kanten des Rechtecks zusammen. Beim Einschrumpfen des Rechtecks werden das schrumpfbare Material und die Metallschiene eng an das Kabel herangezogen und bewirken dadurch eine Fixierung der gesamten Anordnung.

Gemäß einer weiteren bevorzugten Ausgestaltung der Erfindung ist eine der Schichten ein in Längsrichtung geteilter Metallzylinder. Der Metallzylinder besteht bevorzugt aus Stahl-, Kupfer- oder Aluminiumblech. Durch die Teilung des Metallzylinders in Längsrichtung kann der Metallzylinder nachträglich um das verbundene Kabel herumgeführt werden. Die Verwendung eines derartigen Metallzylinders trägt zu den guten Brandschutzeigenschaften der Reparatur- und Verbindungsmuffe bei. Zusätzlich wird die Reparatur- und Verbindungsmuffe durch den Metallzylinder mechanisch stabilisiert und vor Beschädigung oder Verletzung geschützt.

In einer weiteren bevorzugten Ausgestaltung der Erfindung besteht der Metallzylinder aus zwei im Querschnitt halbkreisförmigen Halbschalen, die an jeweils einer ihrer Längskanten über eine Verzahnung miteinander verbunden sind. Der Metallzylinder kann dadurch geteilt und um das Kabel herum zusammengefügt werden. Durch die halbkreisförmige Ausgestaltung der Halbschalen liegt der Zylinder zudem eng an dem Kabel bzw. den unter dem Metall liegenden Schichten an.

In einer weiteren bevorzugten Ausgestaltung der Erfindung weist der Metallzylinder an den Enden in Längsrichtung verlaufende Einschnitte auf und die zwischen den Einschnitten bestehenden Stege sind schräg in Richtung des Kabels abgewinkelt. Die Stege können dabei nach dem Schließen des Metallzylinders um das Kabel herum in Richtung des Kabels abgewinkelt werden. Dadurch wird das Innere des Metallzylinders auch vor Hitzeeinwirkung im Bereich der Enden des Metallzylinders wirksam geschützt. Gleichzeitig wird der Metallzylinder durch die sich gegebenenfalls an einem Kabelmantel abstützenden abgewinkelten Stege auf einfache Weise fixiert.

In einer weiteren bevorzugten Ausgestaltung der Erfindung ist mindestens eine der Schichten eine Brandschutzfolie. Die Brandschutzfolie kann aus einem Fasermaterial mit einem Glasfaseranteil bestehen und gegebenenfalls mit einem Brandschutzmaterial beschichtet sein. Derartige Brandschutzmaterialien werden üblicherweise zum Schutz von Stahlträgern eingesetzt. Die Verwendung einer um das Kabel herum geschlossenen Folie verhindert auch ein Einbrennen einer Flamme entlang der Aderisolierung im Inneren des Kabels. Die Brandschutzfolie kann auch als Rollenmaterial überlappend aufgebracht werden.

Gemäß einer weiteren bevorzugten Ausgestaltung der Erfindung ist die Brandschutzfolie an beiden Seiten der Verbindungsstelle mit jeweils einer Rollfeder an dem Kabel befestigt. Eine Rollfeder ist ein federelastischer Metallstreifen, der in Kreis- oder Spiralform aufgerollt ist. Nach dem Herumführen um die Brandschutzfolie bewirkt die Vorspannung der Rollfeder ein festes Umschließen des Kabels und damit eine gute Fixierung der Brandschutzfolie. Ebenfalls möglich ist es, auch andere Schichten auf gleiche Weise mit Rollfedern zu fixieren.

In einer weiteren bevorzugten Ausgestaltung der Erfindung ist das Kabel ein Signalkabel. Grundsätzlich kann die Reparatur- und Verbindungsmuffe für beliebige Kabeltypen eingesetzt werden. Mit besonderem Vorteil wird sie jedoch für Signalkabel, die eine Vielzahl von Leitern aufweisen, verwendet, weil im Reparaturfall kein Auftrennen intakter Leiter erforderlich ist.

In einer weiteren bevorzugten Ausgestaltung der Erfindung weist die Reparatur-und Verbindungsmuffe für ein Kabel ohne Abschirmung von innen nach außen die folgenden Schichten auf:
- eine Schicht aus Glasseidenband,
- eine Schicht aus Brandschutzfolie, die an den Enden mit jeweils einer Rollfeder fixiert ist,
- eine in Längsrichtung geteilte Schrumpfmanschette, deren Kanten entlang der Teilung von einer Metallschiene zusammengehalten sind,
- eine Schicht aus Brandschutzfolie,
- eine Schicht aus Kupfergewebeband, das an beiden Enden mit jeweils einer Rollfeder fixiert ist,
- einen Aluminiumzylinder, der aus zwei im Querschnitt halbkreisförmigen Halbschalen besteht,
- eine Schicht aus Kupfergewebeband,
- eine Schicht aus Brandschutzfolie,
- eine Schicht aus Kupfergewebeband, das an beiden Enden mit jeweils einer Rollfeder fixiert ist.

Versuche haben ergeben, daß durch diese Kombination von Schichten ein besonders wirksamer Brandschutz erzielt wird.

In einer weiteren bevorzugten Ausgestaltung der Erfindung weist die Reparatur-und Verbindungsmuffe für ein Kabel mit Abschirmung von innen nach außen die folgenden Schichten auf:
- eine Schicht aus Glasseidenband,
- eine Schicht aus Brandschutzfolie, die an den Enden mit jeweils einer Rollfeder fixiert ist,
- eine in Längsrichtung geteilte Schrumpfmanschette, deren Kanten entlang der Teilung von einer Metallschiene zusammengehalten sind,
- eine Schicht aus Kupfergewebeband, das an beiden Enden mit jeweils einer Rollfeder fixiert ist und die Enden der Abschirmung des Kabels miteinander verbindet,
- eine Schicht aus Glasseidenband,
- eine in Längsrichtung geteilte Schrumpfmanschette, deren Kanten entlang der Teilung von einer Metallschiene zusammengehalten sind,
- eine Schicht aus Brandschutzfolie, die an den Enden mit jeweils einer Rollfeder fixiert ist,
- einen Aluminiumzylinder, der aus zwei im Querschnitt halbkreisförmigen Halbschalen besteht,
- eine Schicht aus Kupfergewebeband,
- eine Schicht aus Brandschutzfolie,
- eine Schicht aus Kupfergewebeband, das an beiden Enden mit jeweils einer Rollfeder fixiert ist.

Durch die genannten Schichten wird ein besonders wirksamer Brandschutz erreicht. Gleichzeitig gelingt eine integrierte Verbindung der Abschirmung des Kabels durch die Verbindung der beiden Enden der Abschirmung mit einer Schicht aus Kupfergewebeband, die die Aufgabe der Abschirmung in diesem Bereich übernimmt.

Die obige Aufgabe wird ebenfalls gelöst durch das Verfahren zum Reparieren oder Verbinden eines Kabels mit den Merkmalen des Anspruchs 16.

Das Verfahren wird auf ein Kabel mit mindestens einem durchtrennten oder beschädigten Leiter angewendet und weist die folgenden Schritte auf:
- Verbinden der Leiterenden des durchtrennten oder beschädigten Leiters an einer Verbindungsstelle,
- anschließendes Herumführen einer Vielzahl unterschiedlicher, flammwidriger Schichten um das Kabel und Befestigen der Schichten in einem Abschnitt des Kabels um die Verbindungsstelle herum.

Es wird bei dem erfindungsgemäßen Verfahren also zunächst die Verbindung der Leiterenden ausgeführt und erst anschließend, nach dem Verbinden der Leiterenden, werden die unterschiedlichen, flammwidrigen Schichten um das Kabel herumgeführt. Es wird dadurch ein wirksamer Brandschutz der Verbindungs- und/oder Reparaturstelle des Kabels erreicht, ohne das unbeschädigte Leiter durchtrennt werden müssen, um ein Aufschieben schlauchförmiger Schutzschichten auf ein Kabelende zu ermöglichen. Dadurch kann der Arbeits- und Materialaufwand erheblich reduziert werden.

Vorteilhafte Ausgestaltungen des erfindungsgemäßen Verfahrens sind in den Unteransprüchen angegeben.

Die Erfindung wird nachfolgend anhand von in Figuren dargestellten Ausführungsbeispielen näher erläutert. Es zeigen:
- Fig. 1: ein Kabel mit drei zugehörigen Paaren von Leiterenden, die jeweils an einer Verbindungsstelle miteinander verbunden sind;
- Fig. 2: das Kabel aus Fig. 1, bei dem die Verbindungsstelle mit einem Glasseidenband umwickelt ist;
- Fig. 3: das Kabel aus Fig. 2 mit einer weiteren Schicht aus einer Brandschutzfolie;
- Fig. 4: das Kabel aus den Fig. 3 mit einer von einer Schrumpfmanschette gebildeten Schicht;
- Fig. 5: das Kabel aus Fig. 4, umhüllt mit einem Metallzylinder;
- Fig. 6: das Kabel aus den Fig. 5, bei dem als weitere Schicht eine Umwicklung mit einem Kupfergewebeband vorhanden ist;
- Fig. 7: eine schematische Darstellung eines weiteren Ausführungsbeispiels der Erfindung mit insgesamt elf ein Kabel umhüllenden Schichten;
- Fig. 8: einen Querschnitt durch die Reparatur- und Verbindungsmuffe aus Fig. 7.

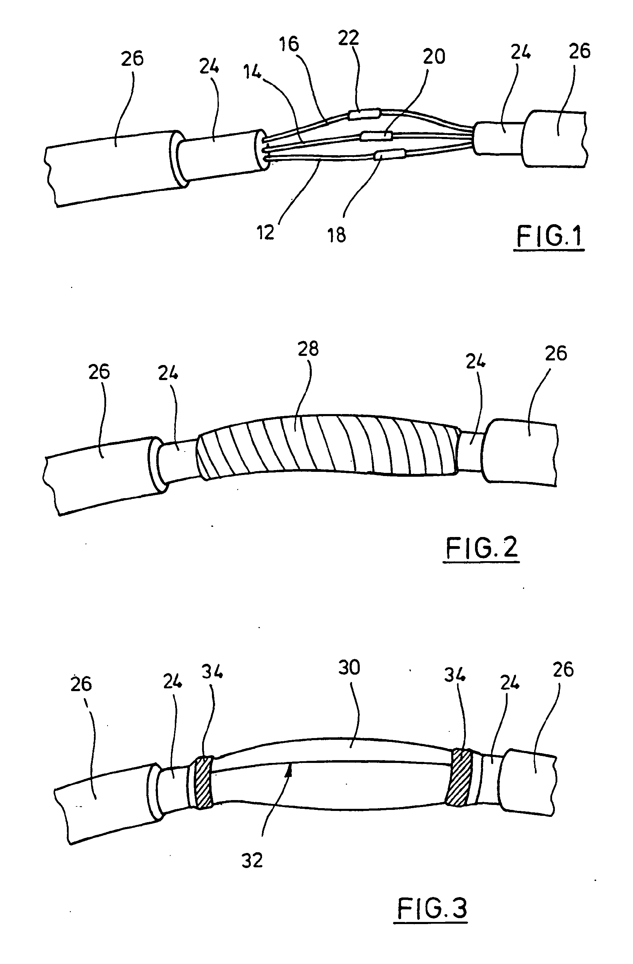

Die Figur 1 zeigt beispielhaft ein Kabel mit drei elektrischen Leitern 12, 14 und 16. Jeder der Leiter weist zwei Enden auf, die an jeweils einer Verbindungsstelle 18, 20 und 22 durch jeweils einen Spleiß verbunden sind. Die Verbindungsstellen sind jeweils von einem Stück Schrumpfschlauch elektrisch isolierend umhüllt. Zu beiden Seiten der Verbindungsstellen 18, 20 und 22 weist das Kabel jeweils einen Innenmantel 24 und einen Außenmantel 26 auf. Der Außenmantel 26 umschließt den Innenmantel 24, in welchem wiederum die drei Leiter 12, 14 und 16 geführt sind. In bezug auf das gesamte Kabel wird im folgenden auch der gesamte, von mindestens einem Kabelmantel befreite Bereich des Kabels als Verbindungsstelle bezeichnet. Es versteht sich, daß die Erfindung anstelle eines wie in der Abbildung dargestellten dreiadrigen, elektrischen Kabels auch für ein Kabel mit beispielsweise mehreren hundert Adern oder für ein Kabel mit einer Vielzahl von Lichtwellenleitern geeignet ist.

In der Figur 2 ist die Verbindungsstelle des Kabels aus Figur 1 mit einer Umwicklung aus einem Glasseidenband 28 dargestellt. Die Umwicklung bedeckt den Bereich zwischen den beiden Enden des Innenmantels vollständig und gegebenenfalls durch mehrfaches Umwickeln in mehreren Lagen, so daß eine lückenlose Umhüllung der drei Leiter entsteht. In der Figur 3 ist das Kabel aus Figur 2 mit einer zusätzlichen Schicht aus einer Brandschutzfolie 30 gezeigt. Die Brandschutzfolie 30 ist eine aus einem Fasermaterial bestehende Folie, die Glasfasern enthält und mit einer Brandschutzschicht beschichtet ist. Zum Anbringen der Brandschutzfolie wird ein rechteckiger Streifen in Längsrichtung um die Verbindungsstelle des Kabels herumgelegt und um das Kabel herumgewickelt. Bei 32 ist eine außen liegende Kante des rechteckigen Brandschutzfolienzuschnitts erkennbar. Die um das Kabel herumgewickelte Brandschutzfolie 30 ist nahe der beiden Enden der Umwicklung mit jeweils einer Rollfeder 34 fest auf dem Innenmantel 24 des Kabels befestigt. Jede Rollfeder 34 besteht aus einem federelastischen Metallstreifen, der um die Brandschutzfolie und das Kabel herumgeschlungen ist und durch seine Vorspannung die Brandschutzfolie fest auf den Innenmantel 24 des Kabels presst.

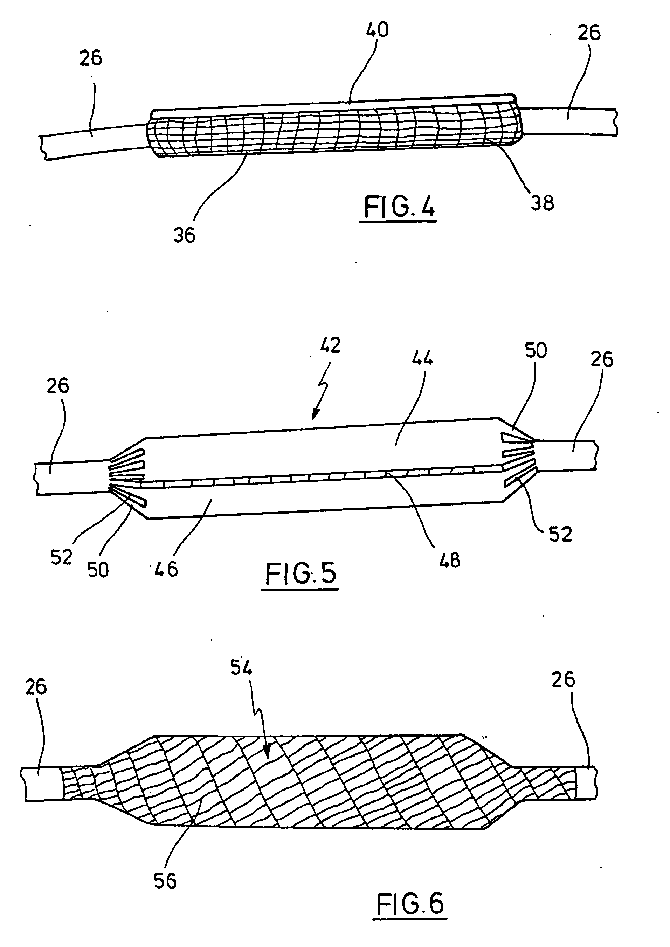

In der Figur 4 ist das Kabel aus Figur 3 mit einer zusätzlichen, von einer Schrumpfmanschette 36 gebildeten Schicht versehen. Die Schrumpfmanschette 36 besteht aus einem rechteckigen Streifen eines schrumpfbaren Materials 38, der um das Kabel herumgeschlungen und im Bereich seiner Längskanten von einer Metallschiene 40 zusammengehalten wird. Die Schrumpfmanschette 36 erstreckt sich bis über jeweils einen Abschnitt der Innenmäntel 24 und der Außenmäntel 26 zu beiden Seiten der Verbindungsstelle des Kabels. Nach dem Zusammenklemmen des schrumpfbaren Materials 38 durch die Metallschiene 40 ist das schrumpfbare Material 38 eingeschrumpft worden, um die gesamte Verbindungsstelle des Kabels einschließlich der beiden Außenmantelabschnitte fest zu umschließen.

Anschließend wird die gesamte Schrumpfmanschette 36 aus Figur 4 mit einer weiteren Schicht einer Brandschutzfolie umhüllt und wiederum mit Rollfedern fixiert, was nicht in einer gesonderten Figur dargestellt ist. Die nicht dargestellte Schicht aus Brandschutzfolie erstreckt sich wie auch die Schrumpfmanschette 36 ebenfalls über jeweils einen Abschnitt des Außenmantels 26.

In der Figur 5 ist als weitere Schicht der Reparatur- und Verbindungsmuffe ein Metallzylinder 42 angebracht. Der Metallzylinder ist aus zwei Halbschalen 44 und 46 aus Aluminium gefertigt. Beide Halbschalen sind im Querschnitt halbkreisförmig. Die Halbschale 44 ist an einer Kante über eine längs verlaufende Verzahnung 48 mit der anderen Halbschale 46 verbunden, so daß der Metallzylinder 42 zu Montagezwecken teilbar ist. Die Verzahnung 48 erstreckt sich über die gesamte Länge der beiden Halbschalen. An beiden Enden der Halbschalen 44 und 46 schließt sich ein Abschnitt aus schräg zum Außenmantel 26 des Kabels hin abgewinkelten Stegen 50 an. Zwischen den Stegen 50 befinden sich Einschnitte 52. Dabei sind Stege 50 und Einschnitte 52 so bemessen, daß die Stege 50 ohne einander zu überlappen bis zum Durchmesser des Außenmantels 26 des Kabels hin abgewinkelt werden können. Dadurch ist die gesamte Verbindungsstelle des Kabels mit den unter dem Metallzylinder befindlichen Schichten von einer weitgehend durchgehenden, massiven Aluminiumschicht bedeckt.

Metallzylinder 42 und Kabel sind in der Figur 6 umhüllt von einer Schicht aus einem Kupfergewebeband 54 dargestellt. Das Kupfergewebeband 54 ist in gleichmäßigen Lagen um den gesamten Metallzylinder herumgewickelt und bedeckt auch jeweils einen Abschnitt des Außenmantels 26 des Kabels beidseits der Verbindungsstelle. In der Figur ist die Gewebestruktur aus Kupferdrähten 56 des Kupfergewebebands 54 angedeutet.

Bevorzugt wird die gesamte Anordnung aus Figur 6 mit einer weiteren Schicht aus einer Brandschutzfolie und einer Schicht aus einem Kupfergewebeband, das an beiden Enden jeweils mit einer Rollfeder fixiert wird, umhüllt.

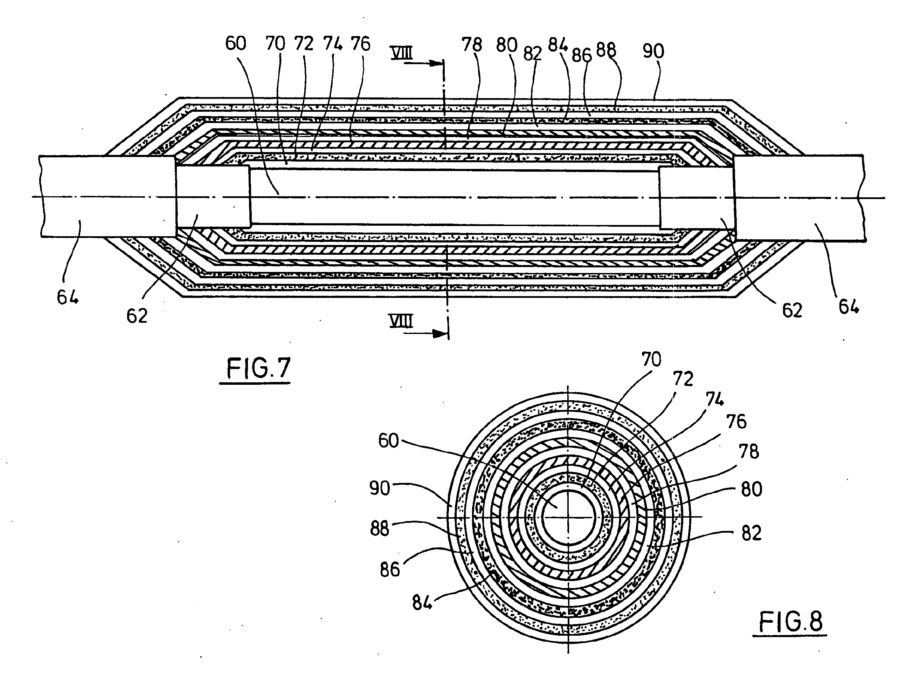

Ein weiteres Ausführungsbeispiel der Erfindung für ein Kabel mit einer Abschirmung ist in der Figur 7 schematisch dargestellt. In der Figur 7 ist die von der Gesamtheit der Leiter gebildete Kabelseele 60 eines Kabels dargestellt. Die Kabelseele 60 ist zu beiden Seiten einer in der Mitte befindlichen Verbindungsstelle von einem Innenmantel 62 und einem Außenmantel 64 des Kabels umgeben. Im Bereich der Verbindungsstelle sind Innen- und Außenmantel entfernt. Dabei erstreckt sich der Bereich, in dem der Außenmantel entfernt ist, über einen größeren Abschnitt in Längsrichtung des Kabels, so daß der Innenmantel 62 in einem Abschnitt unter dem Außenmantel 64 hervorsteht. Die Schichten der Reparatur- und Verbindungsmuffe sind von innen nach außen mit den Bezugszeichen 70 bis 90 numeriert. Die Schichten bestehen aus den folgenden Materialien: Die Schicht 70 besteht aus Glasseidenband; die Schicht 72 besteht aus einer Brandschutzfolie; die Schicht 74 ist eine innere Schrumpfmanschette; die Schicht 76 besteht aus Kupfergewebeband.

Die Umwicklung mit diesem Kupfergewebeband ist so ausgeführt, daß eine im Aufbau des Kabels zwischen dem Innenmantel 62 und dem Außenmantel 64 befindliche Abschirmung, die aus einer Metallfolie oder aus einem Drahtgeflecht bestehen kann, durch das Kupfergewebeband elektrisch leitend miteinander verbunden wird.

Es folgt eine weitere Schicht 78 aus Glasseidenband. Darüber befindet sich die Schicht 80, die von einer äußeren Schrumpfmanschette gebildet ist. Um die äußere Schrumpfmanschette herum verläuft die Schicht 82 aus einer Brandschutzfolie. Außerhalb der Brandschutzfolie verläuft Schicht 84, die von einem Aluminiumzylinder gebildet ist. Der Aluminiumzylinder ist mit einer weiteren Schicht Kupfergewebeband umwickelt, welches die Schicht 86 bildet. Außerhalb der Schicht 86 ist die von einer weiteren Brandschutzfolie gebildete Schicht 88 angeordnet. Die äußerste Schicht 90 wird erneut von einem Kupfergewebeband gebildet, welches an beiden Enden von jeweils einer nicht dargestellten Rollfeder fixiert ist.

In der Figur 8 ist der Aufbau der Reparatur- und Verbindungsmuffe aus Figur 7 im Schnitt dargestellt. Für die einzelnen Schichten werden die gleichen Bezugszeichen verwendet wie in der Figur 7. Gut erkennbar ist die konzentrische Anordnung der einzelnen Schichten.

Im Ausführungsbeispiel der Figuren 7 und 8 werden insgesamt elf Schichten in genau aufeinander abgestimmter Weise miteinander kombiniert. Versuche haben ergeben, daß durch diese Schichtenkombination ein optimaler Brandschutz erzielt wird. Weiterhin werden wichtige Vorgaben zur Rauchdichte und Azidität erfüllt.

## Patentansprüche

1. Reparatur- und Verbindungsmuffe mit einem Kabel, das mindestens einen Leiter (12, 14, 16) mit zwei an einer Verbindungsstelle (18, 20, 22) miteinander verbundenen Leiterenden aufweist, und einer Vielzahl unterschiedlicher, flammwidriger Schichten (28, 30, 36, 42, 54, 70-90), die einen Abschnitt des Kabels um die Verbindungsstelle (18, 20, 22) herum umgeben, wobei alle Schichten nach dem Verbinden der Leiterenden anbringbar sind **dadurch gekennzeichnet daß** mindestens eine der Schichten (28, 30, 36, 42, 54, 70-90) eine Schrumpfmanschette (36, 74, 80) ist, die in Längsrichtung geteilt ist und aus einem schrumpfbaren Material (38) besteht, dessen entlang der Teilungsstelle in Längsrichtung verlaufende Kanten von einer Metallschiene (40) zusammengehalten sind.

2. Reparatur- und Verbindungsmuffe nach Anspruch 1, **dadurch gekennzeichnet, daß** die Schichten (28, 30, 36, 42, 54, 70-90) halogenfrei sind.

3. Reparatur- und Verbindungsmuffe nach Anspruch 1 oder 2, **dadurch gekennzeichnet, daß** das Kabel einen Kabelmantel (24, 26, 62, 64) aufweist, der in einem Abschnitt im Bereich der Verbindungsstelle entfernt ist und mindestens eine der Schichten (28, 30, 36, 42, 54, 70-90) sich von dem Kabelmantel (24, 26, 62, 64) an einer Seite der Verbindungsstelle über die Verbindungsstelle bis zum Kabelmantel (24, 26, 62, 64) an der anderen Seite der Verbindungsstelle erstreckt.

4. Reparatur- und Verbindungsmuffe nach einem der Ansprüche 1 bis 3, **dadurch gekennzeichnet, daß** mindestens eine der Schichten (28, 30, 36, 42, 54, 70-90) aus einem Material mit einer Wärmeleitfähigkeit von mehr als 50 W/(mK), mindestens eine weitere der Schichten (28, 30, 36, 42, 54, 70-90) aus einem Material mit einer Wärmeleitfähigkeit von weniger als 10 W/(mK) besteht.

5. Reparatur- und Verbindungsmuffe nach einem der Ansprüche 1 bis 4, **dadurch gekennzeichnet, daß** mindestens eine der Schichten ein abwickelbares Band (28, 54) ist.

6. Reparatur- und Verbindungsmuffe nach einem der Ansprüche 1 bis 5, **dadurch gekennzeichnet, daß** mindestens eine der Schichten ein Glasseidenband (28, 70, 78) ist.

7. Reparatur- und Verbindungsmuffe nach einem der Ansprüche 1 bis 6, **dadurch gekennzeichnet, daß** mindestens eine der Schichten (28, 30, 36, 42, 54, 70-90) ein Kupfergewebeband (54, 76, 86, 90) ist.

8. Reparatur- und Verbindungsmuffe nach einem der Ansprüche 1 bis 7, **dadurch gekennzeichnet, daß** mindestens eine der Schichten (28, 30, 36, 42, 54, 70-90) ein in Längsrichtung geteilter Metallzylinder (42, 84) ist.

9. Reparatur- und Verbindungsmuffe nach Anspruch 8, **dadurch gekennzeichnet, daß** der Metallzylinder (42, 84) aus zwei im Querschnitt halbkreisförmigen Halbschalen (44, 46) besteht, die an jeweils einer ihrer Längskanten über eine Verzahnung (48) miteinander verbunden sind.

10. Reparatur- und Verbindungsmuffe nach Anspruch 8 oder 9, **dadurch gekennzeichnet, daß** der Metallzylinder (42, 84) an den Enden in Längsrichtung verlaufende Einschnitte (52) aufweist und zwischen den Einschnitten (52) bestehende Stege (50) schräg in Richtung des Kabels abgewinkelt sind.

11. Reparatur- und Verbindungsmuffe nach einem der Ansprüche 1 bis 10, **dadurch gekennzeichnet, daß** mindestens eine der Schichten (28, 30, 36, 42, 54, 70-90) eine Brandschutzfolie (30, 72, 82, 88) ist.

12. Reparatur- und Verbindungsmuffe nach Anspruch 11, **dadurch gekennzeichnet, daß** die Brandschutzfolie (30, 72, 82, 88) an beiden Seiten der Verbindungsstelle mit jeweils einer Rollfeder (34) an dem Kabel befestigt ist.

13. Reparatur- und Verbindungsmuffe nach einem der Ansprüche 1 bis 12, **dadurch gekennzeichnet, daß** das Kabel ein Signalkabel ist.

14. Reparatur- und Verbindungsmuffe nach einem der Ansprüche 1 bis 13, **dadurch gekennzeichnet, daß** sie für ein Kabel ohne Abschirmung von innen nach außen die folgenden Schichten aufweist:
- eine Schicht aus Glasseidenband (28),
- eine Schicht aus Brandschutzfolie (30), die an den Enden mit jeweils einer Rollfeder (34) fixiert ist,
- einer die in Längsrichtung geteilte Schrumpfmanschette (36), deren Kanten entlang der Teilung von einer Metallschiene (40) zusammengehalten sind,
- eine Schicht aus Brandschutzfolie,
- eine Schicht aus Kupfergewebeband, das an beiden Enden mit jeweils einer Rollfeder fixiert ist,
- einen Aluminiumzylinder (42), der aus zwei im Querschnitt halbkreisförmigen Halbschalen (44, 46) besteht,
- eine Schicht aus Kupfergewebeband (54),
- eine Schicht aus Brandschutzfolie,
- eine Schicht aus Kupfergewebeband, das an beiden Enden mit jeweils einer Rollfeder fixiert ist.

15. Reparatur- und Verbindungsmuffe nach einem der Ansprüche 1 bis 14, **dadurch gekennzeichnet, daß** sie für ein Kabel mit Abschirmung von innen nach außen die folgenden Schichten aufweist:
- eine Schicht (70) aus Glasseidenband,
- eine Schicht (72) aus Brandschutzfolie, die an den Enden mit jeweils einer Rollfeder (34) fixiert ist,
- eine die in Längsrichtung geteilte Schrumpfmanschette (74), deren Kanten entlang der Teilung von einer Metallschiene (40) zusammengehalten sind,
- eine Schicht (76) aus Kupfergewebeband, das an beiden Enden mit jeweils einer Rollfeder (34) fixiert ist und die Enden der Abschirmung des Kabels miteinander verbindet,
- eine Schicht (78) aus Glasseidenband,
- eine in Längsrichtung geteilten Schrumpfmanschette (80), deren Kanten entlang der Teilung von einer Metallschiene (40) zusammengehalten sind,
- eine Schicht (82) aus Brandschutzfolie, die an den Enden mit jeweils einer Rollfeder (34) fixiert ist,
- einen Aluminiumzylinder (84), der aus zwei im Querschnitt halbkreisförmigen Halbschalen (44, 46) besteht,
- eine Schicht (86) aus Kupfergewebeband,
- eine Schicht (88) aus Brandschutzfolie,
- eine Schicht (90) aus Kupfergewebeband, das an beiden Enden mit jeweils einer Rollfeder fixiert ist.

16. Verfahren zum Reparieren oder Verbinden eines Kabels mit mindestens einem Leiter (12, 14, 16), der durchtrennt oder beschädigt ist, mit den folgenden Schritten:
- Verbinden der Leiterenden des durchtrennten oder beschädigten Leiters (12, 14, 16) an einer Verbindungsstelle (18, 20, 22),
- anschließendes Herumführen einer Vielzahl unterschiedlicher, flammwidriger Schichten (28, 30, 36, 42, 54, 70-90) um das Kabel und Befestigen der Schichten in einem Abschnitt des Kabels um die mindestens eine Verbindungsstelle (18, 20, 22) herum, **dadurch gekennzeichnet, daß**
- mindestens eine der Schichten (28, 30, 36, 42, 54, 70-90) durch Aufschrumpfen einer Schrumpfmanschette (36, 74, 80) gebildet wird und
- die Schrumpfmanschette (36, 74, 80) durch Herumführen eines rechteckigen Stücks eines schrumpfbaren Materials (38) um die Verbindungsstelle herum, Verbinden der beiden in Längsrichtung verlaufenden Kanten des Stücks mit einer Metallschiene (40) und anschließendes Schrumpfen des Stücks gebildet wird.

17. Verfahren nach Anspruch 16, **dadurch gekennzeichnet, daß** die Schichten (28, 30, 36, 42, 54, 70-90) halogenfrei sind.

18. Verfahren nach Anspruch 16 oder 17, **dadurch gekennzeichnet, daß** das Kabel einen Kabelmantel (24, 26, 62, 64) aufweist, der vor dem Verbinden der Leiterenden in einem Abschnitt im Bereich des mindestens einen durchtrennten oder beschädigten Leiters (12, 14, 16) entfernt wird, wobei mindestens eine der Schichten (28, 30, 36, 42, 54, 70-90) so angebracht wird, daß sie sich von dem Kabelmantel (24, 26, 62, 64) an einer Seite der Verbindungsstelle über die Verbindungsstelle bis zum Kabelmantel (24, 26, 62, 64) an der anderen Seite der Verbindungsstelle erstreckt.

19. Verfahren nach einem der Ansprüche 16 bis 18, **dadurch gekennzeichnet, daß** mindestens eine der Schichten (28, 30, 36, 42, 54, 70-90) von einem Material mit einer Wärmeleitfähigkeit von mehr als 50 W/(mK), mindestens eine weitere der Schichten (28, 30, 36, 42, 54, 70-90) von einem Material mit einer Wärmeleitfähigkeit von weniger als 10 W/(mK) gebildet wird.

20. Verfahren nach einem der Ansprüche 16 bis 19, **dadurch gekennzeichnet, daß** mindestens eine der Schichten durch Umwickeln des Kabelabschnitts mit einem abwickelbaren Band (28, 54) gebildet wird.

21. Verfahren nach Anspruch 20, **dadurch gekennzeichnet, daß** als abwickelbares Band ein Glasseidenband (28) verwendet wird.

22. Verfahren nach Anspruch 20 oder 21, **dadurch gekennzeichnet, daß** als abwickelbares Band ein Kupfergewebeband (54) verwendet wird.

23. Verfahren nach einem der Ansprüche 16 bis 22, **dadurch gekennzeichnet, daß** mindestens eine der Schichten (28, 30, 36, 42, 54, 70-90) durch Anlegen eines in Längsrichtung geteilten Metallzylinders (42, 84) gebildet wird.

24. Verfahren nach Anspruch 23, **dadurch gekennzeichnet, daß** der Metallzylinder (42, 84) aus zwei im Querschnitt halbkreisförmigen Halbschalen (44, 46) besteht, die an jeweils einer ihrer Längskanten mit einer Verzahnung (48) miteinander verbunden sind, und durch Zusammensetzen und anschließendes Fixieren der beiden Halbschalen (44, 46) um das Kabel herum angebracht wird.

25. Verfahren nach Anspruch 23 oder 24, **dadurch gekennzeichnet, daß** der Metallzylinder (42, 84) an den Enden in Längsrichtung verlaufende Einschnitte (52) aufweist und die zwischen den Einschnitten (52) bestehenden Stege (50) nach dem Anbringen des Metallzylinders (42, 84) in Richtung des Kabels abgewinkelt werden.

26. Verfahren nach einem der Ansprüche 16 bis 25, **dadurch gekennzeichnet, daß** mindestens eine der Schichten (28, 30, 36, 42, 54, 70-90) von einer Brandschutzfolie (30, 72, 82, 88), die um das Kabel herum gewickelt wird, gebildet wird.

27. Verfahren nach Anspruch 26, **dadurch gekennzeichnet, daß** die um das Kabel herum gewickelte Brandschutzfolie (30, 72, 82, 88) an beiden Enden mit jeweils einer Rollfeder (34) an dem Kabel befestigt wird.

28. Verfahren nach einem der Ansprüche 16 bis 27, **dadurch gekennzeichnet, daß** das Kabel ein Signalkabel ist.

29. Verfahren nach einem der Ansprüche 16 bis 28 für ein Kabel ohne Abschirmung, **dadurch gekennzeichnet, daß** die folgenden Schritte nacheinander ausgeführt werden:
- Umwickeln des Kabels mit einer Schicht aus Glasseidenband (28),
- Umwickeln des Kabels mit einer Schicht aus Brandschutzfolie (30) und Fixieren der Brandschutzfolie an beiden Enden mit jeweils einer Rollfeder (34),
- Anlegen der in Längsrichtung geteilten Schrumpfmanschette (36), deren Kanten entlang der Teilung von einer Metallschiene (40) zusammengehalten werden,
- Umwickeln des Kabels mit einer Schicht aus Brandschutzfolie,
- Umwickeln des Kabels mit einer Schicht aus Kupfergewebeband, Fixieren des Kupfergewebebands an beiden Enden mit jeweils einer Rollfeder,
- Anbringen eines Aluminiumzylinders (42), der aus zwei im Querschnitt halbkreisförmigen Halbschalen (44, 46) besteht,
- Umwickeln mit einer Schicht aus Kupfergewebeband (54),
- Umwickeln mit einer Schicht aus Brandschutzfolie,
- Umwickeln mit einer Schicht aus Kupfergewebeband, Fixieren des Kupfergewebebands an beiden Enden mit jeweils einer Rollfeder.

30. Verfahren nach einem der Ansprüche 16 bis 28 für ein Kabel mit Abschirmung, **dadurch gekennzeichnet, daß** die folgenden Schritte nacheinander ausgeführt werden:
- Umwickeln des Kabels mit einer Schicht (70) aus Glasseidenband,
- Umwickeln des Kabels mit einer Schicht (72) aus Brandschutzfolie und Fixieren der Brandschutzfolie an beiden Enden mit jeweils einer Rollfeder (34),
- Anlegen der in Längsrichtung geteilten Schrumpfinanschette (74), deren Kanten entlang der Teilung von einer Metallschiene (40) zusammengehalten werden,
- Verbinden der Abschirmung des Kabels durch Umwickeln des Kabels mit einer Schicht (76) aus Kupfergewebeband, Fixieren des Kupfergewebebands an beiden Enden mit jeweils einer Rollfeder (34),
- Umwickeln des Kabels mit einer Schicht (78) aus Glasseidenband,
- Anlegen einer in Längsrichtung geteilten Schrumpfmanschette (80), deren Kanten entlang der Teilung von einer Metallschiene (40) zusammengehalten werden,
- Umwickeln mit einer Schicht (82) aus Brandschutzfolie, Fixieren der Brandschutzfolie an beiden Enden mit jeweils einer Rollfeder (34),
- Anbringen eines Aluminiumzylinders (84), der aus zwei im Querschnitt halbkreisförmigen Halbschalen (44, 46) besteht,
- Umwickeln mit einer Schicht (86) aus Kupfergewebeband,
- Umwickeln mit einer Schicht (88) aus Brandschutzfolie,
- Umwickeln mit einer Schicht (90) aus Kupfergewebeband, Fixieren des Kupfergewebebands an beiden Enden mit jeweils einer Rollfeder.

## Claims

1. Repair and connection bush having a cable which comprises at least one conductor (12, 14, 16) having two conductor ends connected together at a connecting point (18, 20, 22), and a plurality of different flame-retardant layers (28, 30, 36, 42, 54, 70-90) which surround a portion of the cable around the connecting point (18, 20, 22), all layers being able to be attached after connecting the conductor ends, **characterised in that** at least one of the layers (28, 30, 36, 42, 54, 70-90) is a shrink sleeve (36, 74, 80) which is divided in the longitudinal direction and consists of a shrinkable material (38), the edges thereof extending along the dividing point in the longitudinal direction being held together by a metal bar (40).

2. Repair and connection bush according to claim 1, **characterised in that** the layers (28, 30, 36, 42, 54, 70-90) are halogen-free.

3. Repair and connection bush according to claim 1 or 2, **characterised in that** the cable comprises a cable sheath (24, 26, 62, 64) which is removed in a portion in the region of the connecting point and at least one of the layers (28, 30, 36, 42, 54, 70-90) extends from the cable sheath (24, 26, 62, 64) on one side of the connecting point via the connecting point as far as the cable sheath (24, 26, 62, 64) on the other side of the connecting point.

4. Repair and connection bush according to one of claims 1 to 3, **characterised in that** at least one of the layers (28, 30, 36, 42, 54, 70-90) consists of a material with a thermal conductivity of more than 50 W/(mK) and at least one other of the layers (28, 30, 36, 42, 54, 70-90) consists of a material with a thermal conductivity of less than 10 W/(mK).

5. Repair and connection bush according to one of claims 1 to 4, **characterised in that** at least one of the layers is a tape (28, 54) which is able to be unwound.

6. Repair and connection bush according to one of claims 1 to 5, **characterised in that** at least one of the layers is a glass silk tape (28, 70, 78).

7. Repair and connection bush according to one of claims 1 to 6, **characterised in that** at least one of the layers (28, 30, 36, 42, 54, 70-90) is a copper gauze tape (54, 76, 86, 90).

8. Repair and connection bush according to one of claims 1 to 7, **characterised in that** at least one of the layers (28, 30, 36, 42, 54, 70-90) is a metal cylinder (42, 84) divided in the longitudinal direction.

9. Repair and connection bush according to claim 8, **characterised in that** the metal cylinder (42, 84) consists of two half-shells (44, 46) which are semi-circular in cross section and which are connected together at one respective longitudinal edge thereof by a toothing (48).

10. Repair and connection bush according to claim 8 or 9, **characterised in that** the metal cylinder (42, 84) has cut-outs (52) extending at the ends in the longitudinal direction and webs (50) which are present between the cut-outs (52) are angled obliquely in the direction of the cable.

11. Repair and connection bush according to one of claims 1 to 10, **characterised in that** at least one of the layers (28, 30, 36, 42, 54, 70-90) is a fire-retardant film (30, 72, 82, 88).

12. Repair and connection bush according to claim 11, **characterised in that** the fire-retardant film (30, 72, 82, 88) is fastened to the cable on both sides of the connecting point by one respective coil spring (34).

13. Repair and connection bush according to one of claims 1 to 12, **characterised in that** the cable is a signal cable.

14. Repair and connection bush according to one of claims 1 to 13, **characterised in that**, for a cable without shielding, it comprises the following layers, from inside to outside:
- a layer made of glass silk tape (28),
- a layer made of fire-retardant film (30) which is fixed at the ends to one respective coil spring (34),
- a shrink sleeve (36) divided in the longitudinal direction, the edges thereof being held together along the division by a metal bar (40),
- a layer made of fire-retardant film,
- a layer made of copper gauze tap e which is fixed at both ends to o ne respective coil spring,
- an aluminium cylinder (42) which consists of two half-shells (44, 46) which are semi-circular in cross section,
- a layer made of copper gauze tape (54),
- a layer made of fire-retardant film,
- a layer made of copper gauze tap e which is fixed at both ends to o ne respective coil spring.

15. Repair and connection bush according to one of claims 1 to 14, **characterised in that**, for a cable with shielding, it comprises the following layers, from inside to outside:
- a layer (70) made of glass silk tape,
- a layer (72) made of fire-retardant film which is fixed at the ends to one respective coil spring (34),
- a shrink sleeve (74) divided in the longitudinal direction, the edges thereof being held together along the division by a metal bar (40),
- a layer (76) made of copper gauze tape which is fixed at both ends to one respective coil spring (34) and connects together the ends of the shielding of the cable,
- a layer (78) made of glass silk tape,
- a shrink sleeve (80) divided in the longitudinal direction, the edges thereof being held together along the division by a metal bar (40),
- a layer (82) made of fire-retardant film which is fixed at the ends to one respective coil spring (34),
- an aluminium cylinder (84) which consists of two half-shells (44, 46) which are semi-circular in cross section,
- a layer (86) made of copper gauze tape,
- a layer (88) made of fire-retardant film,
- a layer (90) made of copper gauze tape which is fixed at both ends to one respective coil spring.

16. Method for repairing or connecting a cable having at least one conductor (12, 14, 16) which is severed or damaged, comprising the following steps:
- connecting the conductor ends of the severed or damaged conductor (12, 14, 16) at a connecting point (18, 20, 22),
- subsequently passing a plurality of different flame-retardant layers (28, 30, 36, 42, 54, 70-90) around the cable and fastening the layers in a portion of the cable around the at least one connecting point (18, 20, 22), **characterised in that**
- at least one of the layers (28, 30, 36, 42, 54, 70-90) is formed by shrinkingon a shrink sleeve (36, 74, 80) and
- the shrink sleeve (36, 74, 80) is formed by passing a rectangular piece of a shrinkable material (38) around the connecting point, connecting the two edges of the piece extending in the longitudinal direction to a metal bar (40) and subsequently shrinking the piece.

17. Method according to claim 16, **characterised in that** the layers (28, 30, 36, 42, 54, 70-90) are halogen-free.

18. Method according to claim 16 or 17, **characterised in that** the cable has a cable sheath (24, 26, 62, 64) which is removed before connecting the conductor ends in a portion in the region of the at least one severed or damaged conductor (12, 14, 16), at least one of the layers (28, 30, 36, 42, 54, 70-90) being attached such that it extends from the cable sheath (24, 26, 62, 64) on one side of the connecting point via the connecting point as far as the cable sheath (24, 26, 62, 64) on the other side of the connecting point.

19. Method according to one of claims 16 to 18, **characterised in that** at least one of the layers (28, 30, 36, 42, 54, 70-90) is formed from a material with a thermal conductivity of more than 50 W/(mK) and at least one other of the layers (28, 30, 36, 42, 54, 70-90) is formed from a material with a thermal conductivity of less than 10 W/(mK).

20. Method according to one of claims 16 to 19, **characterised in that** at least one of the layers is formed by winding around the cable portion a tape (28, 54) which is able to be unwound.

21. Method according to claim 20, **characterised in that** a glass silk tape (28) is used as a tape which is able to be unwound.

22. Method according to claim 20 or 21, **characterised in that** a copper gauze tape (54) is used as a tape which is able to be unwound.

23. Method according to one of claims 16 to 22, **characterised in that** at least one of the layers (28, 30, 36, 42, 54, 70-90) is formed by positioning a metal cylinder (42, 84) divided in the longitudinal direction.

24. Method according to claim 23, **characterised in that** the metal cylinder (42, 84) consists of two half-shells (44, 46) which are semi-circular in cross section and which are connected together at one respective longitudinal edge thereof by a toothing (48) and is attached around the cable by combining and subsequently fixing the two half-shells (44, 46).

25. Method according to claim 23 or 24, **characterised in that** the metal cylinder (42, 84) has cut-outs (52) extending at the ends in the longitudinal direction and the webs (50) which are present between the cut-outs (52) are angled in the direction of the cable after the metal cylinder (42, 84) has been attached.

26. Method according to one of claims 16 to 25, **characterised in that** at least one of the layers (28, 30, 36, 42, 54, 70-90) is formed by a fire-retardant film (30, 72, 82, 88) which is wound around the cable.

27. Method according to claim 26, **characterised in that** the fire-retardant film (30, 72, 82, 88) wound around the cable is fastened at both ends to one respective coil spring (34) on the cable.

28. Method according to one of claims 16 to 27, **characterised in that** the cable is a signal cable.

29. Method according to one of claims 16 to 28 for a cable without shielding, **characterised in that** the following steps are carried out in succession:
- wrapping the cable with a layer made of glass silk tape (28),
- wrapping the cable with a layer made of fire-retardant film (30) and fixing the fire-retardant film at both ends to one respective coil spring (34),
- positioning the shrink sleeve (36) divided in the longitudinal direction, the edges thereof being held together along the division by a metal bar (40),
- wrapping the cable with a layer made of fire-retardant film,
- wrapping the cable with a layer made of copper gauze tape, fixing the copper gauze tape at both ends to one respective coil spring,
- attaching an aluminium cylinder (42) which consists of two half-shells (44, 46) which are semi-circular in cross section,
- wrapping around a layer made of copper gauze tape (54),
- wrapping around a layer made of fire-retardant film,
- wrapping around a layer made of copper gauze tape, fixing the copper gauze tape at both ends to one respective coil spring.

30. Method according to one of claims 16 to 28, for a cable with shielding, **characterised in that** the following steps are carried out in succession:
- wrapping the cable with a layer (70) made of glass silk tape,
- wrapping the cable with a layer (72) made of fire-retardant film and fixing the fire-retardant film at both ends to one respective coil spring (34),
- positioning the shrink sleeve (74) divided in the longitudinal direction, the edges thereof being held together along the division by a metal bar (40),
- connecting the shielding of the cable by wrapping the cable with a layer (76) made of copper gauze tape, fixing the copper gauze tape at both ends to one respective coil spring (34),
- wrapping the cable with a layer (78) made of glass silk tape,
- positioning a shrink sleeve (80) divided in the longitudinal direction, the edges thereof being held together along the division by a metal bar (40),
- wrapping around a layer (82) made of fire-retardant film, fixing the fire-retardant film at both ends to one respective coil spring (34),
- attaching an aluminium cylinder (84) which consists of two half-shells (44, 46) which are semi-circular in cross section,
- wrapping around a layer (86) made of copper gauze tape,
- wrapping around a layer (88) made of fire-retardant film,
- wrapping around a layer (90) made of copper gauze tape, fixing the copper gauze tape at both ends to one respective coil spring.

## Revendications

1. Manchon de réparation et de raccordement avec un câble ayant au moins un conducteur (12, 14, 16) avec deux extrémités de conducteur reliées entre elles par une zone de raccordement (18, 20, 22), et une multitude de couches ignifuges (28, 30, 36, 42, 54, 70-90) différentes, lesquelles entourent une partie du câble autour de la zone de raccordement (18, 20, 22), dans lequel toutes les couches peuvent être appliquées après le raccordement des extrémités de conducteur, **caractérisé en ce qu'**au moins l'une des couches (28, 30, 36, 42, 54, 70-90) est un manchon rétractable (36, 74, 80) divisé dans le sens longitudinal et constitué d'un matériau rétractable (38), dont les bords s'étendant dans le sens longitudinal le long de la zone de division sont maintenus ensemble par un rail métallique (40).

2. Manchon de réparation et de raccordement selon la revendication 1, **caractérisé en ce que** les couches (28, 30, 36, 42, 54, 70-90) sont exemptes d'halogène.

3. Manchon de réparation et de raccordement selon la revendication 1 ou 2, **caractérisé en ce que** le câble comporte une gaine de câble (24, 26, 62, 64) retirée dans une partie de la zone de raccordement, et au moins l'une des couches (28, 30, 36, 42, 54, 70-90) s'étend à partir de la gaine de câble (24, 26, 62, 64) d'un côté de la zone de raccordement jusqu'à la gaine de câble (24, 26, 62, 64) de l'autre côté de la zone de raccordement, en passant par la zone de raccordement.

4. Manchon de réparation et de raccordement selon l'une des revendications 1 à 3, **caractérisé en ce qu'**au moins l'une des couches (28, 30, 36, 42, 54, 70-90) est constituée d'un matériau avec une conductivité thermique de plus de 50 W/(mK), au moins une autre des couches (28, 30, 36, 42, 54, 70-90) étant constituée d'un matériau avec une conductivité thermique de moins de 10 W/ (mK) .

5. Manchon de réparation et de raccordement selon l'une des revendications 1 à 4, **caractérisé en ce qu'**au moins l'une des couches est une bande déroulable (28, 54).

6. Manchon de réparation et de raccordement selon l'une des revendications 1 à 5, **caractérisé en ce qu'**au moins l'une des couches est une bande en soie de verre (28, 70, 78).

7. Manchon de réparation et de raccordement selon l'une des revendications 1 à 6, **caractérisé en ce qu'**au moins l'une des couches (28, 30, 36, 42, 54, 70-90) est une bande de cuivre tressé (54, 76, 86, 90).

8. Manchon de réparation et de raccordement selon l'une des revendications 1 à 7, **caractérisé en ce qu'**au moins l'une des couches (28, 30, 36, 42, 54, 70-90) est un cylindre métallique (42, 84) divisé dans le sens longitudinal.

9. Manchon de réparation et de raccordement selon la revendication 8, **caractérisé en ce que** le cylindre métallique (42, 84) est constitué de deux demi-coquilles (44, 46) semi-circulaires dans leur section transversale, lesquelles sont reliées entre elles respectivement par une denture (48) sur l'un de leurs bords longitudinaux.

10. Manchon de réparation et de raccordement selon la revendication 8 ou 9, **caractérisé en ce qu'**à ses extrémités, le cylindre métallique (42, 84) comporte des encoches (52) s'étendant dans le sens longitudinal, et des traverses (50) prévues entre les encoches (52) sont coudées en biais en direction du câble.

11. Manchon de réparation et de raccordement selon l'une des revendications 1 à 10, **caractérisé en ce qu'**au moins l'une des couches (28, 30, 36, 42, 54, 70-90) est une feuille ignifuge (30, 72, 82, 88).

12. Manchon de réparation et de raccordement selon la revendication 11, **caractérisé en ce que** la feuille ignifuge (30, 72, 82, 88) est fixée au câble des deux côtés de la zone de raccordement, respectivement à l'aide d'une ressort à col de cygne (34).

13. Manchon de réparation et de raccordement selon l'une des revendications 1 à 12, **caractérisé en ce que** le câble est un câble de signalisation.

14. Manchon de réparation et de raccordement selon l'une des revendications 1 à 13, **caractérisé en ce que** celui-ci comporte les couches suivantes, pour un câble sans blindage, de l'intérieur vers l'extérieur :
- une couche de bande en soie de verre (28),
- une couche de feuille ignifuge (30) fixée par les extrémités à un ressort à col de cygne (34) respectif,
- un manchon rétractable (36) divisé dans le sens longitudinal, dont les bords sont maintenus ensemble le long de la division par un rail métallique (40),
- une couche de feuille ignifuge,
- une couche de bande de cuivre tressé fixée par les deux extrémités à un ressort à col de cygne respectif,
- un cylindre en aluminium (42) constitué de deux demi-coquilles (44, 46) à section transversale semi-circulaire,
- une couche de bande de cuivre tressé (54),
- une couche de feuille ignifuge,
- une couche de bande de cuivre tressé fixée par les deux extrémités à un ressort à col de cygne respectif.

15. Manchon de réparation et de raccordement selon l'une des revendications 1 à 14, **caractérisé en ce qu'**il comporte les couches suivantes, pour un câble avec blindage, de l'intérieur vers l'extérieur :
- une couche (70) de bande en soie de verre,
- une couche (72) de feuille ignifuge fixée par les extrémités à un ressort à col de cygne (34) respectif,
- un manchon rétractable (74) divisé dans le sens longitudinal, dont les bords sont maintenus ensemble le long de la division par un rail métallique (40),
- une couche (76) de bande de cuivre tressé fixée par les deux extrémités à un ressort à col de cygne (34) respectif et reliant entre elles les extrémités du blindage de câble,
- une couche de bande en soie de verre (78),
- un manchon rétractable (80) divisé dans le sens longitudinal, dont les bords sont maintenus ensemble le long de la division par un rail métallique (40),
- une couche (82) de feuille ignifuge fixée par les extrémités à un ressort à col de cygne (34) respectif,
- un cylindre en aluminium (84) constitué de deux demi-coquilles (44, 46) à section transversale semi-circulaire,
- une couche (86) de bande de cuivre tressé,
- une couche (88) de feuille ignifuge,
- une couche (90) de bande de cuivre tressé fixée par les deux extrémités à un ressort à col de cygne respectif.

16. Procédé pour la réparation ou le raccordement d'un câble avec au moins un conducteur (12, 14, 16) sectionné ou endommagé, comprenant les étapes suivantes :
- raccordement des extrémités de conducteur du conducteur sectionné ou endommagé (12, 14, 16) à la zone de raccordement (18, 20, 22),
- enroulement consécutif d'une multitude de couches (28, 30, 36, 42, 54, 70-90) différentes et ignifuges autour du câble, et fixation des couches dans une partie du câble, autour de l'au moins une zone de raccordement (18, 20, 22), **caractérisé en ce que**
- au moins l'une des couches (28, 30, 36, 42, 54, 70-90) est formée par emmanchement à chaud d'un manchon rétractable (36, 74, 80), et
- le manchon rétractable (36, 74, 80) est formé en enroulant une pièce rectangulaire d'un matériau rétractable (38) autour de la zone de raccordement, en raccordant les deux bords longitudinaux de la pièce à un rail métallique (40), et en faisant ensuite rétrécir la pièce.

17. Procédé selon la revendication 16, **caractérisé en ce que** les couches (28, 30, 36, 42, 54, 70-90) sont exemptes d'halogène.

18. Procédé selon la revendication 16 ou 17, **caractérisé en ce que** le câble présente une enveloppe de câble (24, 26, 62, 64) qui est retirée avant le raccordement des extrémités du conducteur dans une partie de la région de l'au moins un conducteur sectionné ou endommagé (12, 14, 16), dans lequel au moins l'une des couches (28, 30, 36, 42, 54, 70-90) est appliquée de manière à s'étendre à partir de l'enveloppe de câble (24, 26, 62, 64) d'un côté de la zone de raccordement jusqu'à l'enveloppe de câble (24, 26, 62, 64) de l'autre côté de la zone de raccordement, en passant par la zone de raccordement.

19. Procédé selon l'une des revendications 16 à 18, **caractérisé en ce qu'**au moins l'une des couches (28, 30, 36, 42, 54, 70-90) est constituée d'un matériau avec une conductivité thermique de plus de 50 W/(mK), au moins une autre des couches (28, 30, 36, 42, 54, 70-90) étant constituée d'un matériau avec une conductivité thermique de moins de 10 W/(mK).

20. Procédé selon l'une des revendications 16 à 19, **caractérisé en ce qu'**au moins l'une des couches est formée en enroulant une bande déroulable (28, 54) autour la partie de câble.

21. Procédé selon la revendication 20, **caractérisé en ce que** la bande déroulable utilisée est une bande en soie de verre (28).

22. Procédé selon la revendication 20 ou 21, **caractérisé en ce que** la bande déroulable utilisée est une bande de cuivre tressé (54).

23. Procédé selon l'une des revendications 16 à 22, **caractérisé en ce qu'**au moins l'une des couches (28, 30, 36, 42, 54, 70-90) est formée en appliquant un cylindre métallique (42, 84) divisé dans le sens longitudinal.

24. Procédé selon la revendication 23, **caractérisé en ce que** le cylindre métallique (42, 84) est constitué de deux demi-coquilles (44, 46) à section transversale semi-circulaire, reliées entre elles par une denture (48) sur l'un de leurs bords longitudinaux, et par l'assemblage et la fixation consécutive des deux demi-coquilles (44, 46) autour du câble.

25. Procédé selon la revendication 23 ou 24, **caractérisé en ce que** le cylindre métallique (42, 84) présente, aux extrémités, des encoches (52) s'étendant dans le sens longitudinal, et les traverses (50) situées entre les encoches (52) sont coudées après l'application du cylindre métallique (42, 84) en direction du câble.

26. Procédé selon l'une des revendications 16 à 25, **caractérisé en ce qu'**au moins l'une des couches (28, 30, 36, 42, 54, 70-90) est formée par une feuille ignifuge (30, 72, 82, 88) enroulée autour du câble.

27. Procédé selon la revendication 26, **caractérisé en ce que** la feuille ignifuge (30, 72, 82, 88) enroulée autour du câble est fixée au câble par les deux extrémités, avec un ressort à col de cygne (34) respectif.

28. Procédé selon l'une des revendications 16 à 27, **caractérisé en ce que** le câble est un câble de signalisation.

29. Procédé selon l'une des revendications 16 à 28 pour un câble sans blindage, **caractérisé en ce que** les étapes suivantes sont exécutées consécutivement :
- enroulement d'une couche de bande en soie de verre (28) autour du câble,
- enroulement d'une couche de feuille ignifuge (30) autour du câble, et fixation de la feuille ignifuge aux deux extrémités avec un ressort à col de cygne (34) respectif,
- pose du manchon rétractable (36) divisé dans le sens longitudinal, dont les bords sont maintenus ensemble le long de la division par un rail métallique (40),
- enroulement d'une couche de feuille ignifuge autour du câble,
- enroulement d'une couche de bande de cuivre tressé autour du câble, fixation de la bande de cuivre tressé aux deux extrémités avec un ressort à col de cygne respectif,
- application d'un cylindre en aluminium (42) constitué de deux demi-coquilles (44, 46) à section transversale semi-circulaire,
- enroulement d'une couche de bande de cuivre tressé (54),
- enroulement d'une couche de feuille ignifuge,
- enroulement d'une couche de bande de cuivre tressé, fixation de la bande de cuivre tressé aux deux extrémités avec un ressort à col de cygne respectif.

30. Procédé selon l'une des revendications 16 à 28, pour un câble avec blindage, **caractérisé en ce que** les étapes suivantes sont exécutées consécutivement :
- enroulement d'une couche (70) de bande en soie de verre autour du câble,
- enroulement d'une couche (72) de feuille ignifuge autour du câble, et fixation de la feuille ignifuge aux deux extrémités avec un ressort à col de cygne (34) respectif,
- pose du manchon rétractable (74) divisé dans le sens longitudinal, dont les bords sont maintenus ensemble le long de la division par un rail métallique (40),
- raccordement du blindage du câble par enroulement d'une couche (76) de bande de cuivre tressé autour du câble, fixation de la bande de cuivre tressé aux deux extrémités avec un ressort à col de cygne (34) respectif,
- enroulement d'une couche de bande en soie de verre (78) autour du câble,
- pose d'un manchon rétractable (80) divisé dans le sens longitudinal, dont les bords sont maintenus ensemble le long de la division par un rail métallique (40),
- enroulement d'une couche de feuille ignifuge (82), fixation de la feuille ignifuge aux deux extrémités avec un ressort à col de cygne (34) respectif,
- application d'un cylindre en aluminium (84) constitué de deux demi-coquilles (44, 46) à section transversale semi-circulaire,
- enroulement d'une couche (86) de bande de cuivre tressé,
- enroulement d'une couche (88) de feuille ignifuge,
- enroulement d'une couche (90) de bande de cuivre tressé, fixation de la bande de cuivre tressé aux deux extrémités avec un ressort à col de cygne respectif.
